# EUROPEAN PATENT APPLICATION

(11) **EP 1 754 763 A2**
(43) Date of publication of application: **21.02.2007**
(21) Application number: 06254278.2
(22) Date of filing: 15.08.2006
(51) Int. Cl.: C09J 5/00, C03C 27/00

(54) **Bonding methods and optical assemblies**

(30) Priority: 15.08.2005 US 708552 P; 16.08.2005 US 708641 P
(71) Applicant: Rohm and Haas Electronic Materials, L.L.C., Marlborough, Massachusetts 01752 (US)
(72) Inventor: Gaebe, Carl E., Blacksburg, Virginia 24060 (US)
(74) Representative: Kent, Venetia Katherine

(57) **Abstract**

Provided are methods of chemically bonding a first object to a second object with a bonding agent that includes magnesium. Also provided are methods of bonding a component in an optical assembly, as well as optical assemblies. The invention finds particular applicability in the optoelectronics industry in forming micro-optical assemblies.

## Description

This application claims the benefit of priority under 35 U.S.C. §119(e) to U.S. Provisional Application No. 60/708,552, filed August 15, 2005 and U.S. Provisional Application No. 60/708,641, filed August 16, 2005, the entire contents of which are incorporated herein by reference.

The present invention relates generally to the field of bonding and more specifically to the field of optoelectronics. In particular, the present invention relates to methods of bonding two objects together, for example, bonding components such as lenses, optical fibers and hermetic lids in optical assemblies. As well, the invention relates to optical assemblies which include bonded components. The invention finds particular applicability to the manufacture of micro-optical assemblies.

Optical assemblies include optical components such as lenses, etalons, and optical fibers, and may include additional components, for example, optoelectronic devices such as semiconductor laser die and photodiodes, as well as lids for hermetically sealing the components. The assemblies further include substrates, or submounts, to which the components are bonded. The bonding agents used are selected based, for example, on component and substrate material, and desired bonding temperature. Bonding agents containing organic materials such as epoxies are known. Organic materials, however, act as contaminants with respect to optical and optoelectronic components, adversely affecting reliability of the formed assemblies. It would therefore be desired to avoid organic-containing bonding agents, particularly in hermetically sealed optical assemblies.

In the optical assembly manufacturing process, the components are typically bonded to the substrate in a sequential manner at progressively lower temperatures to prevent movement or detachment of a previously bonded component due to loosening of the bonding joint. A typical bonding material for optoelectronic devices is a high-temperature solder such as Au/Sn (80:20 eutectic) which has a melting temperature of about 280°C. When bonding components after the optoelectronic device, bonding temperatures should be less than the melting point of such solder to avoid re-melting of the Au/Sn solder joint.

Optical components, such as optical fibers, lenses, filters and etalons, are typically formed of glass or contain a glass-like optical coating. One technique for soldering such components to the substrate involves coating a portion of the optical component with a metal which is adherent to the solder. This technique, however, adds complexity and cost to manufacture of the optical assemblies.

U.S. Patent No. 5,178,319 discloses methods for bonding optical elements such as glass spheres and optical fibers to aluminum. The disclosed methods involve applying pressure together with energy in the form of heat and/or acoustic energy to the interface of the optical element and the aluminum. For purposes of applying heat to the interface, the '319 patent discloses a temperature greater than 300°C, such as 350°C. To allow for a more flexible bonding hierarchy, methods allowing for bonding of optical components at lower temperatures than those used with aluminum would be desirable.

The present invention addresses one or more of the foregoing problems associated with the state of the art.

A first aspect of the invention provides methods of bonding a first object to a second object. The methods involve: (a) providing a first object; (b) providing a second object; and (c) chemically bonding the first object to the second object with a bonding agent that includes magnesium.

A second aspect of the invention provides methods of bonding a component in an optical assembly. The methods involve: (a) providing a substrate; (b) providing a component to be bonded to the substrate; and (c) chemically bonding the component to the substrate with a bonding agent that includes magnesium.

In a third aspect of the invention, optical assemblies are provided. The optical assemblies include a substrate, a component, and a bonding agent that includes magnesium between the substrate and the component for chemically bonding the component to the substrate.

In the methods and optical assemblies of the invention, component such as lenses, optical fibers and hermetic lids can easily be bonded to a substrate. A useful substrate material is silicon, such as single-crystal silicon which may conveniently be in wafer form and which can be made to have a surface oxide. The bonding material may take the form, for example, of one or more preforms, or a layer coated on the optical component and/or substrate. The technique for bonding the component to the substrate may be, for example, a thermo-compression process. The methods may be used in the manufacture of hermetically sealed devices, for example, a hermetically sealed optoelectronic micro-component which includes an optoelectronic device and optical component disposed in a hermetically sealed volume.

As used herein, the terms "a" and "an" are inclusive of "one or more". The term "on" and "over" are used interchangeably in defining spatial relationships, and encompass the presence or absence of intervening layers or structures. Also as used herein, the term "optical assembly" encompasses structures having optical functionality with or without optoelectronic functionality. Also as used herein, the term "metal" encompasses pure metals, metal alloys and metal composites.

The present invention will be discussed with reference to the following drawings, in which like reference numerals denote like features, and in which:
FIG. 1 illustrates an exemplary optical assembly in accordance with the invention;
FIGS. 2A-B illustrate the bonding of components in the optical assembly of FIG. 1, in accordance with the invention; and
FIG. 3 illustrates exemplary bonding pellets or preforms which may be used in the methods of the invention.

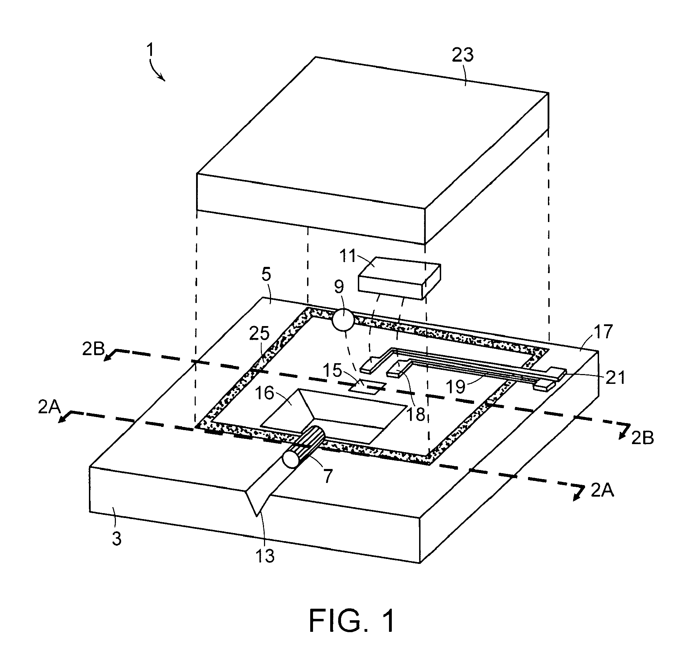

The present invention will now be described with reference to FIG. 1, depicting an illustrative optical assembly 1 in which the bonding methods of the present invention find application. The optical assembly includes a substrate 3 having an upper surface 5 in and on which various surface features are formed. The substrate 3 is typically formed from a semiconductor material which may be in wafer or chip form, such as silicon, for example, <100> single-crystal-silicon, gallium arsenide, indium phosphide, or lithium niobate, ceramic, polymer, or metal. Various components may be bonded to the substrate upper surface 5, including optical and optoelectronic components, as well as a lid for hermetically sealing the assembly. Typical optical components include, for example, optical fibers, lenses, filters and etalons. Optoelectronic devices include, for example, laser die and photodetectors. In the illustrated embodiment, an optical fiber stub 7, ball lens 9, and optoelectronic device 11 are bonded to the substrate upper surface 5.

The upper surface 5 includes one or more surface features formed therein or on for holding the various components. The illustrated surface features include a groove 13, such as a V-groove (shown) or U-groove, for holding the optical fiber stub 7, pit 15 for holding the ball lens 9, light clearance pit 16, and metal feature 17 for electrical connection of the optoelectronic device 11. Metal feature 17 includes contact pads 18 to which optoelectronic device 11 is soldered, metal lines 19 and bonding pads 21 for connection to a power supply. Techniques for forming the surface features are known to those skilled in the art. For example, the V-groove and lens and light clearance pits may be formed using masking and wet and/or dry etching techniques, while the metallization structure may be formed by sputtering, evaporation or plating techniques. These techniques may optionally be used to form a substrate master from which substrates may be formed in a molding process. A lid 23 may further be provided for forming a hermetically enclosed volume for housing the optical and optoelectronic components.

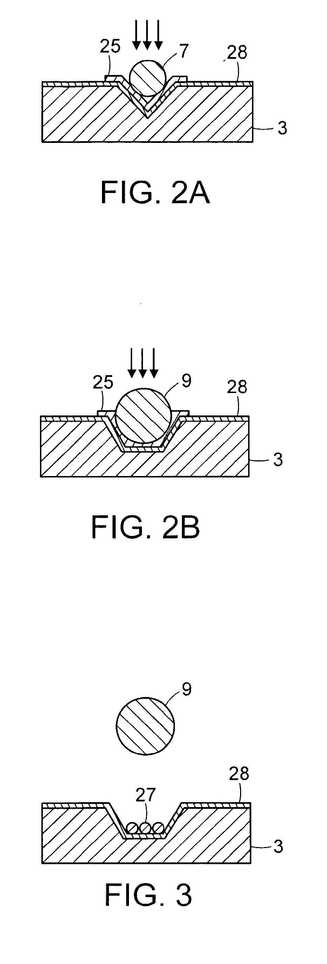

FIGS. 2A and 2B illustrate in cross-section along lines A-A and B-B of FIG. 1, optical fiber stub 7 and ball lens 9, respectively, in the process of being bonded to substrate 3. The optical component is typically formed of an oxide material, for example, a doped glass, such as a borosilicate glass, for example, BK7 borosilicate glass, commercialliy available from Schott Glass Technologies Inc., Duryea, PA USA, a ceramic such as alumina, or a crystal such as sapphire, spinel, or cubic zirconia. If the optical component is not formed of an oxide, it may be coated with an oxide layer such as stoichiometric (SiO₂) or non-stoichiometric silicon oxide, tantalum oxide, or titanium oxide, to allow bonding with the bonding agent, described below.

Bonding of components such as optical components 7, 9 and the hermetic lid 23 to the substrate is facilitated with a bonding agent 25. The bonding agent includes magnesium and is typically magnesium-based (greater than 50 wt% magnesium based on the total bonding agent), for example, metallic magnesium (>99 wt% Mg), a magnesium-based alloy or a magnesium-based composite. Typically, the bonding agent is metallic magnesium. A magnesium-based alloy or composite may be useful, for example, to modify one or more properties of the bonding agent, such as bonding temperature, corrosion resistance, and bond strength. Suitable alloying agents include, for example, Al, Si, Sn, Zn, Zr, Pb, as well as the rare earth elements. Suitable composites include, for example, AZ61A-F (92.35 wt% Mg, 6.5 wt% Al, 0.15 wt% Mn, 1.0 wt% Zn), AZ10A-F (98.2 wt% Mg, 1.2 wt% Al, 0.2 wt% Mn, 0.4 wt% Zn) and AM20-F (97.8 wt% Mg, 2.1 wt% Al, 0.1 wt% Mn), as denoted by the American Society for Testing and Materials (ASTM).

The bonding agent may take the form of a coating formed on the surface of the substrate and/or the component, for example, by evaporation, electroless plating, electrolytic plating, sputtering or other known metallization technique. An intermediate layer may optionally be used to increase adhesion, provide a seed layer for plating or to act as an insulator, for example, between metal lines 19 beneath the bonding agent. The bonding agent thickness to be used will depend, for example, on the bonding agent material, bonding agent density, bonding temperature, geometry of the optical component and that of the bonding region of the substrate. The film density will also play a role in determining the ideal layer thickness. A typical prebonded thickness for a metallic magnesium layer is from 2 to 25 µm, for example, from 10 to 15 µm.

The bonding agent may optionally take the form of one or more pellets or preforms 27 as illustrated in FIG. 3. In this exemplified method, the pellets or preforms may be placed in the recess (e.g., groove 13 or lens pit 15) in the substrate surface prior to or after introducing the optical component into the recess. The use of pellets and preforms in this manner effectively eliminates the expense, processing time and complexity associated with metallization processes. In addition, the pellets and preforms may each be formed from a precise amount of bonding agent and thus produce consistent and uniform bonding. Typically, pellets are generally spherical in geometry but may be irregularly shaped. Preforms may be of any geometry, for example, spherical, torroidal, ellipsoidal or cylindrical. Magnesium preforms are commercially available, for example, from Read International, Riverside, RI USA. In the case of a spherical pellet or preform, for example, a typical size is from 50 to 300 µm, for example, about 100 µm, for bonding a 400 µm ball lens or a 125 µm fiber stub. Suitable geometry and size of the pellets and preforms will depend on various factors, such as geometries of the component and substrate to be bonded.

The bonding agent does not bond well to certain substrate materials, for example, silicon and gallium arsenide. In such case, one or more layers 28 of a material to which the bonding agent will bond may be formed on the substrate. For example, this layer may be formed on the substrate upper surface or on surface features, for example, on the bonding surface of the groove 13 and lens pit 15. Suitable layers include, for example, an oxide such as a silicon oxide such as stoichiometric (SiO₂) or non-stoichiometric silicon oxide, or a metal layer, for example, a layer of aluminum. Suitable thicknesses for these layers will depend, for example, on the specific materials involved and would be understood by those skilled in the art.

The components may be bonded to the substrate 3 with the bonding agent 25 using a thermo-compression bonding technique. In such a process, pressure is applied between the optical component and substrate to compress the component against the substrate as shown by the arrows in FIGS. 2A-B. The thermo-compression bonding technique additionally involves heating of the bonding agent such that the bonding agent is at an elevated temperature during the pressure application. The bonding agent may be heated prior to and/or at the same time the component is compressed against the substrate. In addition, it may be beneficial to continue heating the assembly for a period following the compression. Without being bound by any particular theory, it is believed that the pressure applied between the component and the substrate causes the component to penetrate native oxide formed on the bonding agent. The magnesium in the bonding agent directly contacts and reacts with the oxide or oxide coating of the component, forming an oxide-magnesium bond. The magnesium in the bonding agent thus forms the primary constituent of the chemical bond.

The temperature and pressure applied in the bonding process are high enough to cause bonding between the component and substrate but less than that which would cause deformation or otherwise damage the component. The temperature and pressure will depend, for example, on the bonding agent material, as well as the material and geometries of the component and substrate (e.g., bonding area) and any intervening layers. The bonding temperature is typically from 225 to 500°C, for example, from 250 to 300°C, and may be less than 300°C. The following examples are intended to illustrate further various aspects of the present invention, but are not intended to limit the scope of the invention in any aspect.

### EXAMPLES

### Example 1

With reference to FIGS. 2A-B, a 125 µm diameter glass optical fiber stub 7 and a 400 µm diameter spinel ball lens coated with 1026Å silicon nitride and 2505Å silicon dioxide are bonded to a <100> silicon substrate 3 as follows. A V-groove 13 (nominally 133 µm width) and lens pit 15 (470 by 470 µm width at the substrate surface, 270 µm depth) are formed in the upper surface of the silicon substrate by anisotropic wet etching. A 4700Å thick silicon dioxide layer is formed on the surface of the substrate, V-groove and pit by thermal oxidation. A 12 µm thick layer of magnesium is formed over the oxide in the V-groove and lens pit by thermal evaporation. The fiber stub and ball lens are placed in the V-groove and pit, respectively, and the structure is heated to 275°C on a hot plate. The fiber stub contacts the bonding agent-coated V-groove at two points along its length while the ball lens contacts the pit at four points. Pressure in an amount of 800 grams/mm is applied along the length of the fiber stub and 1000 grams to the ball lens for 10 seconds. The pressure is applied with a pneumatic piston connected to a steel rod which contacts the fiber stub and ball lens. The temperature is maintained during pressure application and for 50 additional seconds. Thermo-compression bonds between the substrate and both the fiber stub and ball lens are thus formed.

### Example 2

The procedures and materials of Example 1 are repeated, except in place of the magnesium layer, two 50-75 µm diameter spherical magnesium pellets are disposed in the V-groove and one such pellet is disposed in the lens pit.

### Example 3

The procedures and materials of Example 2 are repeated, except the magnesium pellets are each replaced with a 100 µm long by 125 µm diameter cylinder of ASTM AZ61A (92.35 wt% Mg, 6.5 wt% Al, 0.15 wt% Mn, 1.0 wt% Zn) wire.

## Claims

1. A method of bonding a first object to a second object, comprising:
(a) providing a first object;
(b) providing a second object; and
(c) chemically bonding the first object to the second object with a bonding agent comprising magnesium.

2. The method of claim 2, wherein the first object is a substrate and the second object is a component, wherein the substrate and component form part of an optical assembly.

3. The method of claim 1 or 2, wherein the substrate is formed of single-crystal silicon having a silicon dioxide layer formed thereon.

4. The method of claim 2 or 3, wherein the component is a lid for hermetically sealing an optical and/or optoelectronic component in an enclosed volume.

5. The method of any of claims 1-4, wherein the bonding agent is metallic magnesium.

6. The method of any of claims 1-5, wherein the bonding agent comprises a preform.

7. The method of any of claims 2-6, wherein (c) comprises forming a thermo-compression bond between the component and the substrate.

8. The method of any of claims 2-7, further comprising, before (c):
(d) bonding a second component to the substrate at a temperature greater than the temperature used in the component bonding of (c).

9. The method of any of claims 2-8, wherein the substrate and the component each comprises an oxide to which the bonding agent chemically bonds.

10. An optical assembly, comprising a substrate, a component, and a bonding agent comprising magnesium between the substrate and the component for bonding the component to the substrate.
